# FASCICULE DE BREVET EUROPEEN

(11) **EP 4 150 302 B1**
(45) Date de publication et mention de la délivrance du brevet: **06.11.2024**
(21) Numéro de dépôt: 21733222.0
(22) Date de dépôt: 18.06.2021
(51) Int. Cl.: G01D 5/347, G02B 5/08

(54) **REVETEMENT REFLECHISSANT DES MOYENS DE REFLEXION D'UN CODEUR OPTIQUE ET CODEUR OPTIQUE AINSI REALISE**
REFLEKTIERENDE BESCHICHTUNG FÜR REFLEXIONSMITTEL EINES OPTISCHEN CODIERERS UND SO HERGESTELLTER OPTISCHER CODIERER
REFLECTIVE COATING FOR REFLECTION MEANS OF AN OPTICAL CODER AND OPTICAL CODER THUS PRODUCED

(30) Priorité: 30.06.2020 FR 2006885
(43) Date de publication de la demande: 22.03.2023
(73) Titulaire: Codechamp, 23190 Champagnat (FR)
(72) Inventeur: GIBARD, Dominique, 23190 Bellegarde En Marche (FR)
(74) Mandataire: Dennemeyer & Associates S.A.
(86) Numéro de dépôt international: PCT/IB2021/055409
(87) Numéro de publication internationale: WO 2022/003473

(56) Documents cités:
- EP-A1- 0 918 236
- EP-A1- 1 154 289
- EP-A2- 2 006 712
- EP-B1- 2 006 712
- US-A1- 2013 221 212

## Description

La présente invention concerne un revêtement réfléchissant des moyens de réflexion d'un codeur optique ainsi que le codeur optique ainsi réalisé.

Un codeur optique, en particulier un codeur optique dit à haute résolution, est un appareil permettant de déterminer la position angulaire d'un objet en mouvement par rapport à un autre. Pour cela, selon un type de codeur optique décrit dans EP-B-964 226, un faisceau optique est émis en direction de moyens réfléchissant assurant la déviation du faisceau lumineux en direction de moyens de réception du faisceau. Un disque rotatif dont on veut déterminer la position angulaire est placé entre les moyens d'émission et de réception du faisceau et les moyens réfléchissants du faisceau lumineux. Le disque comprend des pistes définies par des zones opaques et des zones translucides, caractéristiques de chaque disque. Il comporte également des moyens de diffraction formé par un réticule. Des ouvertures forment les moyens réfléchissants de diffraction du faisceau lumineux entre les moyens d'émission et de réception. Ces ouvertures comprennent au moins deux surfaces disposées angulairement par rapport au plan dans lequel se trouvent les moyens d'émission et de réception du faisceau lumineux. Le faisceau lumineux passe successivement sur les deux surfaces entre l'émission et la réception, le chemin optique du faisceau traversant également au moins une fois le disque en rotation et au moins une fois le réticule assurant la diffraction.

Ici, les surfaces réfléchissantes sont disposées angulairement, par exemple à 45°. Si un tel codeur permet, dans un encombrement réduit, d'effectuer une mesure de la position angulaire d'un objet en rotation il est essentiel d'assurer une réflexion optimale du faisceau lumineux entre les surfaces. En d'autres termes, il ne faut pas qu'il y ait une modification dans le temps du coefficient de réflexion entre les surfaces, pour la longueur d'onde concernée, sachant que le coefficient de réflexion doit être le plus élevé possible, afin d'éviter toute perte lumineuse lors du trajet du faisceau optique. Or, ici, les surfaces réfléchissantes sont obtenues, selon un mode de réalisation, par usinage des ouvertures de formes données dans un bloc de matériau et par polissage des surfaces. En variante, des prismes sont positionnés dans les ouvertures et définissent les surfaces réfléchissantes disposées angulairement. On connait par US-A-2013/221212 une surface de réflexion intégrée au corps du capteur. La surface est formée par une couche de métal noble résistant à la corrosion comme l'or et fixée sur une couche d'un autre métal, de sorte que l'ensemble ne dépasse pas de la surface du capteur. EP-A-2006712 décrit une surface de réflexion d'un codeur optique à base de siliciure de chrome et de titane comme matériau d'adhésion à l'or pour réaliser un revêtement avec des aspérités permettant le changement de phase de la réflexion sur le revêtement.

Il n'est donc pas aisé avec les surfaces réfléchissantes de l'état de la technique d'obtenir une perte de réflexion minimale, durable dans le temps cela en préservant une fabrication aisée à un coût maitrisé.

C'est à ce besoin que se propose de remédier l'invention en proposant un revêtement des surfaces réfléchissantes d'un capteur optique assurant un coefficient de réflexion élevé et durable dans le temps, une mise en oeuvre aisée, cela sans modifier l'encombrement initial du capteur, à un coût maitrisé.

A cet effet, l'invention a pour objet un revêtement réfléchissant des moyens de réflexion d'un faisceau lumineux émis par une source lumineuse d'un codeur optique, la réflexion du faisceau lumineux étant dirigée vers un photorécepteur, caractérisé en ce que le revêtement comprend au moins une lamelle plane en verre dont une face forme un moyen de liaison sur une partie du moyen de réflexion dudit codeur optique, ladite lamelle étant pourvue, sur la face opposée à la face formant un moyen de liaison, d'au moins une couche en au moins un matériau ayant un coefficient de réflexion supérieur à 96% pour les longueurs d'ondes du faisceau lumineux à réfléchir, ledit matériau ayant un coefficient de réflexion supérieur à 96% étant de l'or ou un alliage à base d'or et en ce qu'il comprend une couche de matériau de protection de la couche d'or.

On obtient ainsi un revêtement réfléchissant qui incorpore les moyens de liaison sur les moyens de réflexion du codeur optique. L'utilisation d'une lamelle de verre, outre le fait de ne pas modifier sensiblement l'encombrement des moyens de réflexion, facilite la manipulation et la mise en place du revêtement. Le matériau réfléchissant étant présent dès le départ sur la lamelle de verre, une fois cette dernière fixée sur les moyens de réflexion, ce dernier est directement opérationnel, la couche de protection permettant de maintenir dans le temps la valeur initiale de réflexion . De plus, une lamelle de verre permet d'obtenir une surface parfaitement plane sur laquelle il est possible de déposer une couche uniforme, d'une épaisseur contrôlée de matériau réfléchissant.

Selon des aspects avantageux mais non obligatoires de l'invention, un tel revêtement réfléchissant peut comprendre une ou plusieurs des caractéristiques suivantes:
- la face en verre opposée à la face formant un moyen de liaison reçoit une couche d'un matériau ayant des caractéristiques physico chimiques telles qu'il adhère, d'une part, à ladite face en verre et, d'autre part, qu'il adhère à un autre matériau ou à un mélange ou alliage de matériaux ayant un coefficient de réflexion supérieur à 96% pour les longueurs d'onde du faisceau lumineux à réfléchir.
- Le matériau assurant la liaison entre la face et le matériau réfléchissant est du chrome ou un alliage de chrome.
- Le matériau ayant un coefficient de réflexion supérieur à 96% est de l'argent ou un alliage à base d'argent.
- La lamelle de verre et les couches de matériaux sont fixées sur un support formé par une feuille de polymères.

La lamelle de verre et les couches de matériaux sont prédécoupées sur la feuille aux dimensions voulues correspondant à celles du revêtement réfléchissant.

L'invention concerne également un codeur optique équipé d'au moins un moyen de réflexion conforme à l'une des caractéristiques précédentes.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig. 1] illustre une vue en perspective de la partie d'un codeur optique comprenant des moyens de réflexion conforme à un mode de réalisation de l'invention,
[Fig. 2] est un schéma, à une autre échelle, illustrant le principe de fonctionnement d'un codeur optique selon un mode de réalisation de l'invention,
[Fig. 3] est une vue en perspective, simplifiée et à plus grande échelle, d'un revêtement d'un moyen de réflexion de la figure 1 et
[Fig. 4] est une vue en perspective, à une autre échelle et simplifiée, du mode de fourniture d'un ensemble de revêtement tels que représentés à la figure 3.

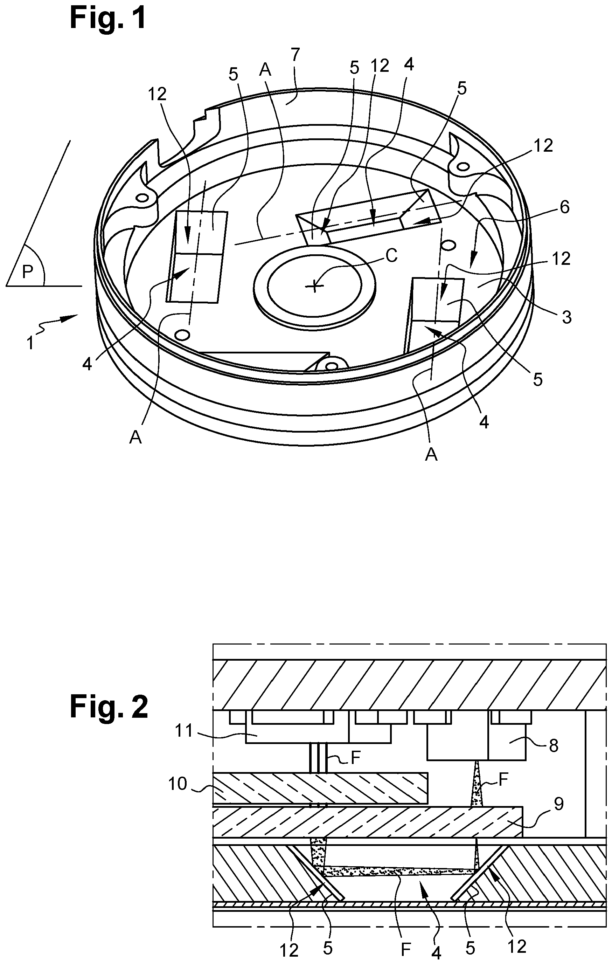

La figure 1 est une représentation d'une partie d'un codeur optique, référencée 1, qui correspond à la partie du codeur optique recevant les moyens de réflexion, référencés 2. La partie 1 est configurée en un volume circulaire ouvert sur le haut en regardant la figure 1. Cette ouverture supérieure permet de recevoir les autres éléments constitutifs d'un codeur optique, tels que schématiquement illustrés à la figure 2. Le fond 3 de la partie 1 est plat et, dans l'exemple, équipé de trois découpes traversantes rectangulaires 4. En variante, le nombre de découpes est différent de trois. Les parois 5 de ces découpes 4 correspondant aux petits côtés des découpes rectangulaires 4 sont inclinées à 45° par rapport au plan principal P du fond 3. L'inclinaison des parois 5 est orientée de sorte que l'ouverture de l'angle défini par les parois 5 soit située sur la face interne 6 du fond 3, donc la face orientée en direction des autres éléments constitutifs du codeur optique lorsque ces derniers sont en place au-dessus de la partie 1.

Comme cela ressort de la figure 1, dans ce type de codeur optique, les axes longitudinaux principaux A des découpes 4 sont orientés angulairement les uns par rapport aux autres. Ces découpes 4 sont réparties sur le fond 3, entre le centre C du fond 3 et la paroi périphérique 7 limitant le fond 3. Ainsi, les découpes 4 et les parois inclinées 5 définissent les moyens de réflexion 2. En variante non illustrée, le nombre, la disposition, la forme et les dimensions des découpes 4 sont différents.

La figure 2 représente schématiquement le fonctionnement d'un tel codeur optique et, en particulier, le rôle des moyens de réflexion 2. Une diode électroluminescente 8 émet, avantageusement dans l'infrarouge, un faisceau lumineux F qui traverse un réticule de verre 9 avant de frapper une des parois 5 qui le dévie et le renvoie sur l'autre paroi 5 d'une découpe 4, selon une direction parallèle au plan P du fond 3, du fait de l'inclinaison à 45°. Le faisceau F repasse par le réticule de verre 9 et à travers un disque de verre 10 avant de frapper des photorécepteurs 11. Le disque 10 est rotatif, avec des plages opaques et des plages translucides. Le réticule de verre 9 assure la diffraction du faisceau F. Un fonctionnement détaillé de ce type de codeur optique est, par exemple, fourni par EP-B-964 226.

La figure 2 illustre le rôle des parois 5 qui assurent la réflexion selon des directions définies du faisceau optique F. Un tel trajet globalement en U du faisceau F permet de positionner dans le codeur optique l'émetteur 8 et le récepteur 11 du faisceau lumineux F sur un même plan, ce qui permet un gain sur l'encombrement total du codeur, notamment en épaisseur.

On note que la réflexion du faisceau F entre les parois 5 doit se faire, de manière constante, sans aucune perte optique et en respectant précisément le parallélisme des chemins optiques du faisceau F entre l'émetteur 8 et une paroi 5 et entre l'autre paroi 5 et le récepteur 11, pour garantir l'exactitude de la mesure. Les caractéristiques de la réflexion doivent être constantes dans le temps, sans altération ou modification, quel que soient le nombre de mesures effectuées, les conditions environnementales telles que, par exemple, les écarts thermiques, les vibrations, les chocs et cela sur toute la durée de vie d'un codeur optique sachant que cette durée de vie est au moins de 20 ans.

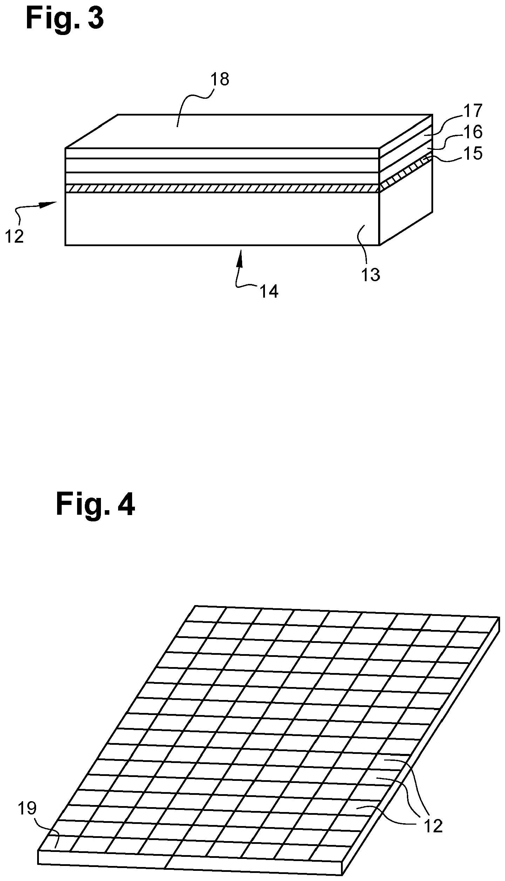

Chaque paroi 5 est ainsi pourvue d'un revêtement réfléchissant 12. Ce revêtement 12 est particulièrement visible à la figure 3. Selon l'invention, le revêtement 12 comporte une lamelle en verre 13, plane. Une telle lamelle 13 a une épaisseur comprise entre 0,15 mm et 0,25 mm, avantageusement voisine de 0,2 mm. Dans la mesure où les plans inclinés sont usinés avec un angle optimal pour réaliser le trajet du faisceau lumineux, il faut que le revêtement ait un impact minimal sur la réflexion initiale, donc une épaisseur minimale afin de limiter les imperfections optiques de réflexion, tout en étant suffisamment solide et rigide. De ce fait, une épaisseur de la lamelle de verre voisine de 0,2 mm est retenue. Une face inferieure 14, en regardant la figure 3, de la lamelle 13 est adaptée pour être fixée sur une paroi 5. La fixation se fait par collage, avantageusement avec une colle polymérisable sous ultraviolets. Une telle colle doit être fluide pour être utilisée en couche mince afin de ne pas affecter l'épaisseur totale du revêtement. Cette colle doit supporter les chocs, les vibrations, les fortes amplitudes thermiques, par exemple de -40°C à +150°C, être durable dans le temps compte tenu de la durée de vie d'un codeur qui est d'au moins 20 ans et être suffisamment souple pour encaisser les dilatations thermiques différentes entre le verre de la lamelle et le métal de la paroi inclinée. Par ailleurs, la polymérisation de la colle doit être quasiment immédiate, typiquement de l'ordre de 15 s une fois que la lamelle est en position et que l'utilisateur souhaite effectuer le collage. Une telle colle est, par exemple, une colle à base acrylique transparente commercialisée par la société PANACOL. En variante, on utilise une autre colle, par exemple thermo polymérisable à des températures ambiantes, généralement comprises entre 20°C et 25°C.

La face 15, opposée à la face 14 est schématiquement représentée à la figure 3 par des hachures, pour plus de lisibilité. La face 15 reçoit une couche d'un matériau 16 ayant des caractéristiques physico chimiques telles qu'il adhère, d'une part, parfaitement au verre et, d'autre part, qu'il adhère à un autre matériau ou à un mélange ou alliage de matériaux ayant un coefficient de réflexion supérieur à 96% pour les longueurs d'onde concernées, à savoir en l'espèce des longueurs d'onde comprises entre 800 nm et 900 nm. Ici, le matériau 16 est du chrome. En variante, il s'agit d'un matériau ou d'un alliage de matériaux permettant d'adhérer sur du verre et présentant une adhérence également sur l'or.

On conçoit que le matériau 16, donc ici le chrome, est choisi non seulement comme ayant une adhérence optimale sur le verre mais aussi en fonction du matériau 17 retenu pour son coefficient de réflexion élevé. Ici, le matériau 17 est de l'or pur à 99,99% dont le coefficient de réflexion à 850 nm est de 97,8%.

La couche de chrome 16 est fixée sur la face15 par des techniques connues en soi, par exemple par dépôt sous évaporation. Une telle technique permet de réaliser une couche de chrome 16 comprise entre 0,05 micron et 0,1 micron.

La couche d'or 17 est également déposée selon cette technique et elle présente également une épaisseur compris entre 0,05 micron et 0,1 micron. En d'autres termes, les épaisseurs cumulées de la lamelle 13, des couches de chrome 16 et d'or 17 sont de l'ordre de 0,2 mm ce qui ne modifie pas sensiblement l'épaisseur des parois 5 et donc le trajet du faisceau F.

L'or est choisi pour réaliser la couche de matériau réfléchissant 17 car, outre un coefficient de réflexion élevé, à savoir supérieur à 96% pour les longueurs d'onde comprises entre 800 nm et 900 nm, donc dans l'infrarouge, ce métal est inerte, presque insensible à la corrosion, totalement amagnétique, ductile, malléable et aisément polissable. Il est utilisé pour obtenir une surface plane réfléchissante, régulière, homogène, en préservant la planéité initiale, proche du poli miroir, du verre. Du fait que l'or est un métal malléable et tendre à température ambiante, une couche 17 d'or est d'autant plus sensible au marquage et aux chocs qu'elle est fine. On constate également, avec le temps, un phénomène de patinage. Avantageusement, la couche 17 d'or est revêtue d'une couche en un matériau protecteur 18. En effet, il convient d'éviter tout marquage de la surface de la couche 17 et tout effet d'oxydation ou de patine de la couche d'or 17. En absence de couche de protection 18, on observe dans le temps une dégradation de la réflexion, du fait du ternissement de la couche par des phénomènes de patine et/ou d'oxydation. Le maintien dans le temps du coefficient de réflexion étant un point important pour la fiabilité du codeur, la présence d'une couche de protection 18 permettant de maintenir un coefficient de réflexion constant sur une période d'au moins 20 ans est nécessaire. Il est donc avantageux de déposer dessus une couche 18 d'un matériau protecteur. Ce dernier doit être totalement transparent et neutre optiquement afin de ne pas affecter le trajet du faisceau, que ce soit en déviant ce dernier et/ou en en absorbant une partie. L'alumine répond à ces exigences. Pour cela, on dépose une couche d'alumine sur la couche 17 d'une épaisseur voisine de 0,015mm. Une telle épaisseur de la couche de protection 18 assure une protection optimale sans affecter l'épaisseur nominale du revêtement. En variante il s'agit d'un autre matériau ou d'un matériau composite, par exemple de la silice utilisable pour protéger, par exemple, d'autres dépôts d'un autre matériau que l'or, par exemple des dépôts à base d'argent.

Les dimensions du revêtement 12, donc de la lamelle de verre 13 revêtue de la couche de chrome 16, de la couche d'or 17 et de la couche protectrice 18 sont généralement comprises entre 2,5 mm et 3 mm de large pour 2,5 mm à 3 mm de long avec une épaisseur inférieure à 0,3 mm.

On conçoit donc que la manipulation, le transport et le stockage de tels revêtements 12 ne sont pas aisés. En conséquence, comme cela ressort à la figure 4, les revêtements 12 sont réalisés préalablement à la mise en oeuvre de l'invention par pré-découpage dans une feuille 19 qui définit un moyen de stockage et de transport des revêtements 12. Cette feuille 19 est obtenue à partir d'une feuille de polymères sur laquelle, par des techniques connues en soi comme le dépôt par évaporation, on dépose les différentes couches 13, 16 à 18 constitutives du revêtement 12. Par sciage, on prédécoupe ensuite chaque revêtement 12 aux dimensions voulues. Ici, les revêtements 12 prédécoupés sont disposés en rangées parallèles. Chaque revêtement 12 étant voisin d'un autre revêtement 12, la séparation entre deux revêtements 12 étant matérialisée par une ligne de découpe, afin de pouvoir prendre individuellement un revêtement 12 sans risque d'endommager un revêtement 12 voisin, comme illustré à la figure 4. En variante, la disposition des revêtements 12 sur la feuille 19 est différente. De telles feuilles 19 sont réalisées au préalable, par des techniques connues en soi auprès de fournisseurs spécialisés.

Il est ensuite aisé de prendre les revêtements 12 prédécoupés sur la feuille 19 et de les positionner sur les parois 5. La fixation, comme indiqué précédemment, est réalisée par collage, avantageusement avec une polymérisation de la colle sous UV. En variante, on utilise un autre type de colle, par exemple, une colle polymérisable à température ambiante, en présence ou non d'un activateur.

Le revêtement 12 est positionné sur la paroi 5, lors de l'étape de fixation par collage, de sorte qu'il couvre la totalité de la surface de la paroi 5. Ainsi, lorsque le faisceau F frappe la couche réfléchissante 17, même si le faisceau F n'est pas parfaitement au centre de la couche réfléchissante 17, cela n'affecte pas le chemin optique du faisceau F en direction de l'autre paroi 5.

Dans d'autres modes de réalisation de l'invention, le revêtement réfléchissant ayant un coefficient de réflexion d'au moins 96% aux longueurs d'onde considérées est obtenu par usinage, polissage du matériau constitutif des parois 5. Dans un tel cas, lesdites parois 5 sont, par exemple en un autre métal ou alliage de métaux ou matériau ayant des propriétés optiques similaires. Le matériau ayant un coefficient de réflexion supérieur à 96% est de l'or ou un alliage d'or de dilatation similaire à celui du verre. ;

## Revendications

1. Revêtement réfléchissant (12) des moyens de réflexion (2) d'un faisceau lumineux (F) émis par une source lumineuse (8) d'un codeur optique, la réflexion du faisceau lumineux (F) étant dirigée vers un photorécepteur (11), **caractérisé en ce que** le revêtement (12) comprend au moins une lamelle (13) plane en verre, constitutive du revêtement, dont une face (14) forme un moyen de liaison sur une partie (5) du moyen de réflexion (2) dudit codeur optique, ladite lamelle étant revêtue, sur la face opposée (15) à la face (14) formant un moyen de liaison, d'au moins une couche (17) en or ou en un alliage à base d'or ayant un coefficient de réflexion supérieur à 96% pour les longueurs d'ondes du faisceau lumineux (F) comprises entre 800 nm et 900 nm, la lamelle (13) ayant une épaisseur nominale compris entre 0,15 mm et 0,25 mm et **en ce qu'**il comprend une couche de matériau de protection (18) de la couche d'or (17), le matériau de protection étant transparent, neutre optiquement et n'affectant pas l'épaisseur nominale de la lamelle (13) revêtue d'or (17).

2. Revêtement selon la revendication 1, **caractérisé en ce que** la face opposée (15) à la face (14) formant un moyen de liaison reçoit une couche d'un matériau (16) ayant des caractéristiques physico chimiques telles qu'il adhère, d'une part, à la face (15) en verre et, d'autre part, qu'il adhère à un autre matériau (17) ou à un mélange ou alliage de matériaux ayant un coefficient de réflexion supérieur à 96% pour les longueurs d'onde du faisceau lumineux (F) à réfléchir.

3. Revêtement selon la revendication 2, **caractérisé en ce que** le matériau (16) assurant la liaison entre la face (15) et le matériau réfléchissant (17) est du chrome ou un alliage de chrome.

4. Revêtement selon la revendication 2, **caractérisé en ce que** la lamelle de verre (13) et les couches de matériaux (16 à 18) sont fixées sur un support formé par une feuille de polymères (19).

5. Codeur optique équipé d'au moins un moyen de réflexion (2) conforme à l'une quelconque des revendications 1 à 4.

## Patentansprüche

1. Reflektierende Beschichtung (12) der Reflexionsmittel (2) eines Lichtstrahls (F), der von einer Lichtquelle (8) eines optischen Codierers emittiert wird, wobei die Reflexion des Lichtstrahls (F) auf einen Photorezeptor (11) gerichtet ist, **dadurch gekennzeichnet, dass** die Beschichtung (12) mindestens eine ebene Lamelle (13) aus Glas umfasst, die die Beschichtung bildet, deren eine Fläche (14) ein Verbindungsmittel auf einem Teil (5) des Reflexionsmittels (2) des optischen Codierers bildet, wobei die Lamelle auf der Fläche (15), die der Fläche (14) gegenüberliegt, die ein Verbindungsmittel bildet, mit mindestens einer Schicht (17) aus Gold oder einer Legierung auf Goldbasis beschichtet ist, die einen Reflexionskoeffizienten von mehr als 96 % für die Wellenlängen des Lichtstrahls (F) zwischen 800 nm und 900 nm aufweist, wobei die Lamelle (13) eine Nenndicke zwischen 0,15 mm und 0,25 mm aufweist, und dadurch, dass sie eine Schicht aus Schutzmaterial (18) der Goldschicht (17) umfasst, wobei das Schutzmaterial transparent, optisch neutral ist und die Nenndicke der Lamelle (13), die mit Gold (17) beschichtet ist, nicht beeinflusst.

2. Beschichtung nach Anspruch 1, **dadurch gekennzeichnet, dass** die Fläche (15), die der Fläche (14) gegenüberliegt, die ein Verbindungsmittel bildet, eine Schicht aus einem Material (16) mit physikalisch-chemischen Eigenschaften erhält, die derart sind, dass es einerseits an der Fläche (15) aus Glas haftet und andererseits an einem anderen Material (17) oder an einer Mischung oder Legierung von Materialien haftet, die einen Reflexionskoeffizienten von mehr als 96 % für die Wellenlängen des zu reflektierenden Lichtstrahls (F) aufweisen.

3. Beschichtung nach Anspruch 2, **dadurch gekennzeichnet, dass** das Material (16), das die Verbindung zwischen der Fläche (15) und dem reflektierenden Material (17) sicherstellt, Chrom oder eine Chromlegierung ist.

4. Beschichtung nach Anspruch 2, **dadurch gekennzeichnet, dass** die Glaslamelle (13) und die Materialschichten (16 bis 18) auf einem Träger befestigt sind, der durch eine Polymerfolie (19) gebildet ist.

5. Optischer Codierer, der mit mindestens einem Reflexionsmittel (2) nach einem der Ansprüche 1 bis 4 ausgestattet ist.

## Claims

1. A reflective coating (12) of means of reflection (2) of a light beam (F) emitted by a light source (8) of an optical encoder, the reflection of the light beam (F) being directed towards a photo receptor (11) **characterized in that** the coating (12) comprises at least one flat glass blade (13), incorporating the coating, the face (14) of which forms a means of a connection on one part (5) of the means of reflection (2) of said optical encoder, said blade being coated, on the face (15) opposite the face (14) forming a means of connection, of at least one layer of gold or gold alloy (17) having a coefficient of reflection greater than 96% for the wavelengths of the light beam (F) comprised between 800 nm and 900 nm, the blade (13) having a nominal thickness comprised between 0.15 mm and 0.25 mm, and **in that** the coating comprises a layer of protective material (18) of the gold layer (17), the protective material being transparent, optically neutral and not affecting the nominal thickness of the gold (17) coated blade (13).

2. The coating according to claim 1, **characterized in that** the face (15) opposite the face (14) forming a means of connection receives a layer of a material (16) having physical and chemical characteristics such that the coating adheres both to the glass face (15) and to another material (17) or to a mixture or to a mixture or alloy of materials having a coefficient of reflection greater than 96% for the wavelengths of the light beam (F) to reflect.

3. The coating according to claim 2 **characterized in that** the material (16) providing the connection between the face (15) and the reflecting material (17) is chromium or an alloy of chromium.

4. The coating according to claim 2 **characterized in that** the glass blade (13) and the layers of materials (16 to 18) are attached onto a support formed by a sheet of polymers (19).

5. An optical encoder equipped with a means of reflection (2) according to any of claims 1 to 4.
